Europäisches Patentamt

European Patent Office

Office européen des brevets

(19)

(11) Publication number: **0 091 406**
A2

(12) # EUROPEAN PATENT APPLICATION

(21) Application number: 83830062.2

(22) Date of filing: 23.03.83

(51) Int. Cl.³: **F 16 H 3/64**
//B60K17/34

(30) Priority: 05.04.82 IT 6744782

(43) Date of publication of application:
12.10.83 Bulletin 83/41

(84) Designated Contracting States:
DE FR GB IT SE

(71) Applicant: S.I.R.P. STUDI INDUSTRIALI
REALIZZAZIONE PROTOTIPI S.p.A.
Via A.Grandi 11
I-10024 Moncalieri (Torino)(IT)

(72) Inventor: Candellero, Giovanni
Via S. Marino 21
I-10134 Torino(IT)

(74) Representative: Jacobacci, Filippo et al,
c/o JACOBACCI-CASETTA & PERANI S.p.A. Via Alfieri 17
I-10121 Torino(IT)

(54) Motor vehicle transmission system.

(57) A transmission system for a motor vehicle which has a transversely-mounted front engine (1), a gear box (2) also mounted transversely, and a differential (3) connecting the secondary shaft of the gear box to the two half axles (5) of the front wheels, includes an epicyclic reduction gear train (14) housed in the differential housing and connecting the secondary shaft of the gear box (2) to the planet carrier (10) of the differential, and a device (28) for selectively rendering the said epicyclic reduction gear train operative and inoperative.

FIG. 2

FIG. 1

EP 0 091 406 A2

- 1 -

"Motor vehicle transmission system"

The present invention relates to a transmission system for a motor vehicle which has a transversely-mounted front engine, a gear box also mounted transversely, and a differential connecting the secondary shaft of the gear box to the two half axles of the front wheels.

The object of the present invention is to provide a transmission system of the type specified above which has a series of low speeds in addition to the normal speeds of the gear box and which has a simple structure of small bulk.

The invention is intended to be used in particular in four wheel drive vehicles.

The main characteristic of the invention lies in the fact that the transmission system includes an epicyclic reduction gear train included in the housing of the differential and connecting the secondary shaft of the gear box to the planet carrier of the differential, and a device for selectively rendering the said epicyclic reduction gear train operative and inoperative.

The invention will now be described with reference to the appended drawings, provided purely by way of non-limiting example, in which:

Figure 1 is a perspective view of a transmission system according to the present invention, and

Figure 2 is a partially sectioned view of a detail of the transmission system of Figure 1.

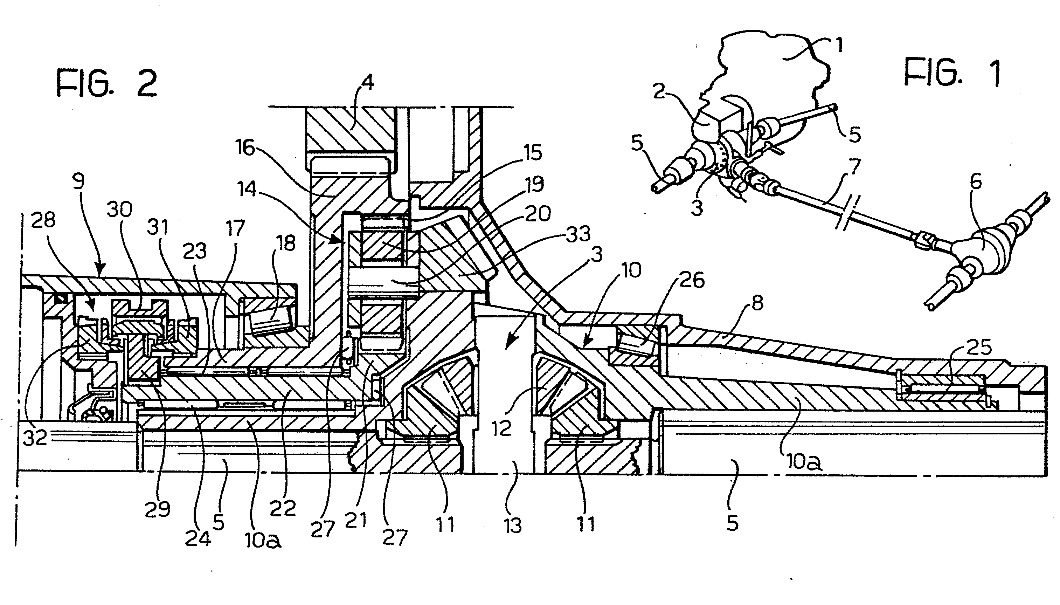

In Figure 1, an internal combustion engine is generally indicated 1 and is intended to be mounted in the front part of a motor vehicle with its shaft disposed trasversely of the longitudinal axis of the motor vehicle.

The engine 1 includes a gear box 2 of the type with gears in continuous mesh and which has a primary shaft and a secondary shaft also arranged transversely of the longitudinal axis of the vehicle.

A front differential indicated by 3 is driven by a pinion 4 keyed onto the secondary shaft of the gear box 2 and transmits drive torque to the front wheels of the motor vehicle through two half-axles 5.

The transmission system illustrated in Figure 1 further includes a rear differential 6 which serves to transmit drive torque to the rear wheels of the motor vehicle and is connected through a transmission shaft 7 to the differential 3 in the manner which will be described in detail below.

The differential 3 is housed in a housing 8 joined to the gear box housing 9.

The differential 3 is of known type having a planet carrier 10 (see Figure 2) which has two opposed hubs 10a within which are rotatably mounted the half axles 5 for transmitting drive torque to the front wheels of the motor vehicle. On the facing ends of the two half axles 5 are mounted two pinions 11 which are in mesh with two planets 12 (only one of which is visible in Figure 2) which in their turn are rotatably supported about a pin 13 fixed to the planet carrier 10.

The planet carrier 10 of the differential 3 is connected to the pinion 4 keyed onto the secondary shaft of the gear box through an epicyclic reduction gear train 14.

The epicyclic gear train 14 includes an internally-toothed crown wheel 15 carried by a gear wheel 16 which meshes with the pinion 4 and has a hub 17 rotatably mounted within the housing 9 of the gear box by means of a conical bearing 18.

The planet carrier 10 of the differential 3 also takes on the function of the planet carrier of the epicyclic gear train 14. It in fact supports a series of three planets 19 equi-angularly spaced from each other and rotatably mounted on pins 20 fixed to the planet carrier 10. Each planet 19 meshes with the internally-toothed crown wheel 15 and with the teeth of a sun gear 21. The sun gear 21 has a hub 22 which is rotatably mounted by means of roller bearings 23, 24, between the hub 17 of the gear wheel 16 and one of the two hubs 10a of the planet carrier 10.

The planet carrier 10 of the differential 3 is rotatably mounted within the housing 8 by means of a roller bearing 25 and a conical bearing 26.

Two axial bearings 27 are also interposed between the sun gear 21 and the gear wheel 16 and between the sun gear 21 and the planet carrier 10 and serve to transmit axial thrust to the bearings 25, 26.

The system illustrated in Figure 2 further includes a synchroniser 28 arranged to selectively render the epicyclic reduction gear train 14 operative and inoperative.

The synchroniser 28 includes a disc 29 which is fixed to the hub 22 of the sun gear 21 and on which a sleeve 30 is axially slidable. This sleeve is displaceable axially between two operative positions to render the disc 29 rigid respectively with a wheel 31 carried by the hub 17 of the gear wheel 16 and with a wheel 32 carried by the housing 9 of the gear box.

The sleeve 30 of the synchroniser 28 is connected through a mechanical transmission (not illustrated) to a control lever operable by the driver of the vehicle.

When the sleeve 30 is in its position corresponding to connection of the disc 29 with the wheel 31, the sun gear 21 is rendered rigid with the gear wheel 16 carrying the internally-toothed crown wheel 15. Consequently, under these conditions, the epicyclic reduction gear train is inoperative and the transmission system allows the gear box 2 to operate with the normal speeds.

When the sleeve 30 is brought into the position corresponding to connection of the disc 29 with the wheel 32, the sun gear 21 is connected to the fixed structure of the gear box whereby the epicyclic gear train 14 acts as a reduction gear. Consequently, the transmission system under these conditions operates with a series of lower speeds than the normal speeds of the gear box.

In a variant (not illustrated) the internally-toothed crown wheel 15 is carried by the planet carrier 10 of the differential 3 while the planet carrier carrying the planets 20 is rigid with the gear 16. In this case the planets of each pair also mesh one with the gear 15 and the other with the sun gear 21.

The device 28 which allows the epicyclic gear train to be selectively rendered operative and inoperative could also be formed, instead of in the form of a synchroniser device, in the form of an hydraulically-operated cone friction clutch. An example of such a clutch which is of known type is described and illustrated in a copending Application filed by the Applicants on the same date.

The planet carrier 10 of the differential 3 supports a bevel gear 33 which meshes with a corresponding bevel gear (not illustrated) connected to the transmission shaft 7 to allow the transmission of drive to the rear axle of the vehicle.

CLAIMS:

1.    A transmission system for a motor vehicle which has a transversely-mounted front engine, a gear box also disposed transversely, and a differential connecting the secondary shaft of the gear box to the two half-axles of the front wheels,

characterised in that this system includes an epicyclic reduction gear train (14) housed in the housing of the differential (3) and connecting the secondary shaft of the gear box to the planet carrier (10) of the differential, and a device (28) for selectively rendering the said epicyclic reduction gear train (14) operative and inoperative.

2.    A transmission system according to Claim 1, characterised in that the said epicyclic gear train (14) includes an internally-toothed crown wheel (15) carried by a gear wheel (16) which meshes with a corresponding pinion (4) keyed onto the secondary shaft of the gear box, a sun gear (21) rotatably mounted relative to the planet carrier (10) of the differential (3) and relative to the said gear wheel (16), and a series of planets (19) carried by the planet carrier (10) of the differential (3).

3.    A transmission system according to Claim 2, characterised in that the device for rendering the epicyclic gear train (14) operative and inoperative includes a movable member (30) selectively displaceable between a first operative position, in which it renders the sun gear (21) rigid with the fixed structure (9) of the gear box, and a second inoperative position in which

- 7 -

it renders the sun gear (21) rigid with the said gear wheel (16) meshing with the pinion (4) keyed onto the secondary shaft of the gear box.

4. A transmission system according to Claim 3, characterised in that the said control device (28) is constituted by a synchroniser device.

5. A transmission system according to any one of the preceding claims, characterised in that the planet carrier (10) of the differential (3) carries a bevel gear (33) for transmitting drive to the rear axle of the vehicle.

FIG. 2

FIG. 1

00914O6

1/1